(19) **Europäisches Patentamt**
**European Patent Office**
**Office européen des brevets**

(11) **EP 4 648 410 A1**

(12) **EUROPEAN PATENT APPLICATION**

(43) Date of publication:
**12.11.2025  Bulletin 2025/46**

(21) Application number: **24315169.3**

(22) Date of filing: **15.04.2024**

(51) International Patent Classification (IPC):
**H04N 19/117** *(2014.01)*   **H04N 19/46** *(2014.01)*
**H04N 19/70** *(2014.01)*   **H04N 19/85** *(2014.01)*
**G06T 5/00** *(2024.01)*   **H04N 19/17** *(2014.01)*
**H04N 19/82** *(2014.01)*

(52) Cooperative Patent Classification (CPC):
**H04N 19/46; G06T 5/70; H04N 19/117;**
**H04N 19/17; H04N 19/70; H04N 19/82;**
**H04N 19/85;** G06T 2207/10016; G06T 2207/20084;
G06T 2207/20204

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **InterDigital CE Patent Holdings, SAS**
**75017 Paris (FR)**

(72) Inventors:
• **Le Meur, Olivier**
  **35160 TALENSAC (FR)**

• **Aumont, Franck**
  **35770 VERN SUR SEICHE (FR)**
• **Demarty, Claire-Helene**
  **35520 MONTREUIL LE GAST (FR)**
• **Ameur, Zoubida**
  **35510 CESSON SEVIGNE (FR)**
• **Blonde, Laurent**
  **35235 THORIGNE-FOUILLARD (FR)**
• **Reinhard, Erik**
  **35630 HEDE-BAZOUGES (FR)**

(74) Representative: **Interdigital**
**Immeuble ZEN 2**
**845 A, avenue des Champs Blancs**
**35510 Cesson-Sévigné (FR)**

(54) **FILM GRAIN NEURAL NETWORK POST FILTER**

(57) Syntax elements allow to enable applying film grain using a neural network post-processing filter. Syntax elements define parameters related to the film grain neural network post-processing filter. An encoded video bitstream carries such syntax elements from an encoding device to a decoding device, thus allowing the encoding device to specify how to apply film grain using a neural network post-processing filter and the decoding device to apply the film grain neural network post-processing filter when displaying the decoded video. Additional syntax elements specify parameters comprising a film grain style, a film grain intensity, a film grain purpose or a region of interest where to apply the film grain.

Figure 6

**EP 4 648 410 A1**

**Description**

TECHNICAL FIELD

At least one of the present embodiments generally relates to a video encoding and decoding method and device, and more particularly to syntax elements defining film grain parameters for a neural network post-processing filter.

BACKGROUND ART

To achieve high compression efficiency, image and video coding schemes usually employ prediction and transform to leverage spatial and temporal redundancy in the video content. Generally, intra or inter prediction is used to exploit the intra or inter frame correlation, then the differences between the original image block and the predicted image block, often denoted as prediction errors or prediction residuals, are transformed, quantized and entropy coded. During encoding the original image block is usually partitioned/split into sub-blocks for example using quad-tree partitioning. To reconstruct the video, the compressed data is decoded by inverse processes corresponding to the prediction, transform, quantization and entropy coding.

Originally noise due to the process of analog photography, the so-called film grain consisted in a sensor noise, naturally present and unique for each analog camera. With the era of digital cameras, this sensor noise has disappeared at the capture stage thanks to the use of electronic sensors but is now added afterwards to the digital content to recreate a movie look. The random nature of this noise makes it difficult to compress using traditional coding tools. The common parameters of the encoding tools, such as those chosen for low bit rates, can remove film grain. High bitrates are required to keep and reconstruct film grain with sufficient quality, which is contrary to the encoding/decoding goal of saving bits while encoding content. To overcome this encoder filtering issue, some video coding solutions remove and model film grain before the encoding stage and add it back again, during a so-called synthesis step, at the decoding stage. Adding film grain at the decoding stage, even for contents that did not originally contain film grain, can also help to mask artefacts or distortions that may appear in content, in particular because of the encoding/decoding process.

SUMMARY

According to a first aspect of at least one embodiment, a method comprises obtaining video data, determining a supplemental enhancement information message comprising a flag enabling film grain neural network post-processing filter, encoding video data, generating bitstream comprising encoded video and supplemental enhancement information message and providing the bitstream.

According to a second aspect of at least one embodiment, a method comprises obtaining a bitstream comprising encoded video data and a supplemental enhancement information message comprising a flag enabling film grain neural network post-processing filter, decoding video, in the condition that the flag enabling film grain neural network post-processing filter is enabled, applying to the decoded video the film grain neural network post-processing filter, and providing the video.

According to a third aspect of at least one embodiment, an apparatus comprises one or more processors configured to obtain video data, determine a supplemental enhancement information message comprising a flag enabling film grain neural network post-processing filter, encode video data, generate bitstream comprising encoded video and supplemental enhancement information message, and provide the bitstream.

According to a fourth aspect of at least one embodiment, an apparatus comprises one or more processors configured to obtain a bitstream comprising encoded video data and a supplemental enhancement information message comprising a flag enabling film grain neural network post-processing filter, decode video, in the condition that the flag enabling film grain neural network post-processing filter is enabled, apply to the decoded video the film grain neural network post-processing filter and provide the video.

In variant embodiments of first, second, third and fourth aspect, the supplemental enhancement information message further comprises information representative of film grain neural network post-processing filter parameters. This information may define a style of film grain, a film grain intensity, a film grain pattern, or a region of interest determining a rectangular area where the film grain should be applied.

One or more of the present embodiments also provide a computer readable storage medium having stored thereon instructions according to at least part of any of the methods described above. One or more embodiments also provide a computer readable storage medium having stored thereon a bitstream generated according to the encoding methods described above. One or more embodiments also provide a computer program product including instructions for performing at least part of any of the methods described above.

BRIEF SUMMARY OF THE DRAWINGS

Figure 1 illustrates a block diagram of an example of a system in which various aspects and embodiments are implemented.

Figure 2 describes an example of a context in which following embodiments can be implemented.

Figure 3 illustrates a block diagram of an example of video encoder.

Figure 4 illustrates a block diagram of an example of video decoder.

Figure 5 illustrates an example of partitioning undergone by an image of an original video sequence.

Figure 6 illustrates a block diagram of an example of video coding system according to embodiments.

Figure 7 illustrates an example process for encoding a bitstream comprising a film grain NNPFC SEI message according to embodiments.

Figure 8 illustrates an example process for decoding a bitstream comprising a film grain NNPFC SEI message according to embodiments.

DETAILED DESCRIPTION

The present aspects, although describing principles in the context of VVC (Versatile Video Coding) or HEVC (High Efficiency Video Coding) specifications, are not limited to these video coding standards, and can be applied, for example, to other standards and recommendations and extensions of any such standards and recommendations (including VVC and HEVC). Unless indicated otherwise, or technically precluded, the aspects described in this application can be used individually or in combination.

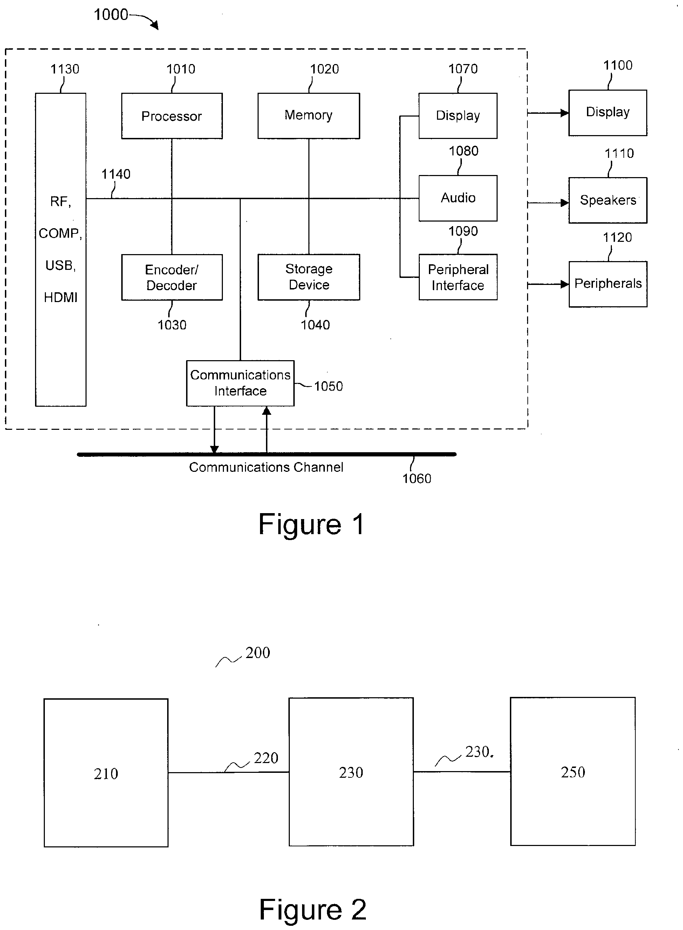

**Figure 1** illustrates a block diagram of an example of a system in which various aspects and embodiments are implemented. System 1000 can be embodied as a device or apparatus including the various components described below and is configured to perform one or more of the aspects described in this document. Examples of such devices include, but are not limited to, various electronic devices such as computers, smartphones, tablets, digital multimedia set top boxes, digital television receivers, personal video recording systems, connected home appliances, vehicle entertainment systems, vehicle control systems, drones, video surveillance cameras, and more generally data servers. Elements of system 1000, singly or in combination, can be embodied in a single integrated circuit (IC), multiple Ics, and/or discrete components. For example, in at least one embodiment, the processing and encoder/decoder elements of system 1000 are distributed across multiple Ics and/or discrete components. In various embodiments, the system 1000 is communicatively coupled to one or more other systems, or other electronic devices, via, for example, a communications bus or through dedicated input and/or output ports. In various embodiments, the system 1000 is configured to implement one or more of the aspects described in this document.

The system 1000 includes at least one processor 1010 configured to execute instructions loaded therein for implementing, for example, the various aspects described in this document. Processor 1010 can include embedded memory, input output interface, and various other circuitries as known in the art. The system 1000 includes at least one memory 1020 (e.g., a volatile memory device, and/or a non-volatile memory device). System 1000 includes a storage device 1040, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash-based memory, magnetic disk drive, solid-state drive (SSD), and/or optical disk drive. The storage device 1040 can include an internal storage device, an attached storage device (including detachable and non-detachable storage devices), and/or a network accessible storage device (a.k.a. cloud storage), as non-limiting examples.

System 1000 includes an encoder/decoder module 1030 configured, for example, to process data to provide an encoded video or decoded video, and the encoder/decoder module 1030 can include its own processor and memory. The encoder/decoder module 1030 represents module(s) that can be included in a device to perform the encoding and/or decoding functions described further below. As is known, a device can include one or both of the encoding and decoding modules. Additionally, encoder/decoder module 1030 can be implemented as a separate element of system 1000 or can be incorporated within processor 1010 as a combination of hardware and software as known to those skilled in the art.

Program code to be loaded onto processor 1010 or encoder/decoder 1030 to perform one or more of the aspects described in this document can be stored in storage device 1040 and subsequently loaded onto memory 1020 for execution by processor 1010. In accordance with various embodiments, one or more of processor 1010, memory 1020, storage device 1040, and encoder/decoder module 1030 can store one or more of various items during the performance of the processes described in this document. Such stored items can include, but are not limited to, the input video, the decoded video or portions of the decoded video, the bitstream, matrices, variables, and intermediate or final results from the processing of equations, formulas, operations, and operational logic.

In some embodiments, memory inside of the processor 1010 and/or the encoder/decoder module 1030 is used to store instructions and to provide working memory for processing that is needed during encoding or decoding. In other embodiments, however, a memory external to the processing device (for example, the processing device can be either the processor 1010 or the encoder/decoder module 1030) is used for one or more of these functions. The external memory can be the memory 1020 and/or the storage device 1040, for example, a dynamic volatile memory and/or a non-volatile flash memory. In several embodiments, an external non-volatile flash memory is used to store the operating system of, for example, a television. In at least one embodiment, a fast external dynamic volatile memory such as a RAM is used as working memory for video coding and decoding operations, such as for MPEG-2 (MPEG refers to the Moving Picture Experts Group, MPEG-2 is also referred to as ISO/IEC 13818, and 13818-1 is also known as H.222, and 13818-2 is also known as H.262), HEVC (HEVC refers to High Efficiency Video Coding, also known as H.265), or VVC (Versatile Video Coding, also known as H.266).

The input to the elements of system 1000 can be provided through various input devices as indicated in block 1130. Such input devices include, but are not limited to, a radio frequency (RF) portion that receives an RF signal transmitted, for example, over the air by a broadcaster, a Component (COMP) input terminal (or a set of COMP input terminals), a Universal Serial Bus (USB) input terminal, and/or a High-Definition Multimedia Interface (HDMI) input terminal. Other examples include composite video.

In various embodiments, the input devices of block 1130 have associated respective input processing elements as known in the art. For example, the RF portion can be associated with elements suitable for selecting a desired frequency (also referred to as selecting a signal, or band-limiting a signal to a band of frequencies), down converting the selected signal, band-limiting again to a narrower band of frequencies to select (for example) a signal frequency band which can be referred to as a channel in certain embodiments, demodulating the down converted and band-limited signal, performing error correction, and demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, down converting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, down converting, and filtering again to a desired frequency band. Various embodiments rearrange the order of the above-described (and other) elements, remove some of these elements, and/or add other elements performing similar or different functions. Adding elements can include inserting elements in between existing elements, such as, for example, inserting amplifiers and an analog-to-digital converter. In various embodiments, the RF portion includes an antenna. The RF portion may comply with standard specifications such as those published by Digital Video Broadcasting (DVB), Advanced Television Systems Committee (ATSC), Association of Radio Industries and Businesses (ARIB) or others.

Additionally, the USB and/or HDMI terminals can include respective interface processors for connecting system 1000 to other electronic devices across USB and/or HDMI connections. It is to be understood that various aspects of input processing, for example, Reed-Solomon error correction, can be implemented, for example, within a separate input processing IC or within processor 1010 as necessary. Similarly, aspects of USB or HDMI interface processing can be implemented within separate interface Ics or within processor 1010 as necessary. The demodulated, error corrected, and demultiplexed stream is provided to various processing elements, including, for example, processor 1010, and encoder/decoder 1030 operating in combination with the memory and storage elements to process the data stream as necessary for presentation on an output device.

Various elements of system 1000 can be provided within an integrated housing, Within the integrated housing, the various elements can be interconnected and transmit data therebetween using suitable connection arrangement 1140, for example, an internal bus as known in the art, including the Inter-IC (I2C) bus, wiring, and printed circuit boards.

The system 1000 includes communication interface 1050 that enables communication with other devices via communication channel 1060. The communication interface 1050 can include, but is not limited to, a transceiver configured to transmit and to receive data over communication channel 1060. The communication interface 1050 can include, but is not limited to, a modem or network card and the communication channel 1060 can be implemented, for example, within a wired and/or a wireless medium.

Data is streamed, or otherwise provided, to the system 1000, in various embodiments, using a wireless network such as a Wi-Fi network, for example IEEE 802.11 (IEEE refers to the Institute of Electrical and Electronics Engineers). The Wi-Fi signal of these embodiments is received over the communications channel 1060 and the communications interface 1050 which are adapted for Wi-Fi communications. The communications channel 1060 of these embodiments is typically connected to an access point or router that provides access to external networks including the Internet for allowing streaming applications and other over-the-top communications. Other embodiments provide streamed data to the system 1000 using a set-top box that delivers the data over the HDMI connection of the input block 1130. Still other embodiments provide streamed data to the system 1000 using the RF connection of the input block 1130. As indicated above, various embodiments provide data in a non-streaming manner. Additionally, various embodiments use wireless networks other than Wi-Fi, for example a cellular network or a Bluetooth network.

The system 1000 can provide an output signal to various output devices, including a display 1100, speakers 1110, and other peripheral devices 1120. The display 1100 of various embodiments includes one or more of, for example, a touchscreen display, an organic light-emitting diode (OLED) display, a curved display, and/or a foldable display. The display 1100 can be for a television, a tablet, a laptop, a cell phone (mobile phone), or other device. The display 1100 can also be integrated with other components (for example, as in a smart phone), or separate (for example, an external monitor for a laptop). The other peripheral devices 1120 include, in various examples of embodiments, one or more of a stand-alone digital video disc (or digital versatile disc) (DVR, for both terms), a disk player, a stereo system, and/or a lighting system. Various embodiments use one or more peripheral devices 1120 that provide a function based on the output of the system 1000. For example, a disk player performs the function of playing the output of the system 1000.

In various embodiments, control signals are communicated between the system 1000 and the display 1100, speakers 1110, or other peripheral devices 1120 using signaling such as AV.Link, Consumer Electronics Control (CEC), or other communications protocols that enable device-to-device control with or without user intervention. The output devices can be communicatively coupled to system 1000 via dedicated connections through respective interfaces 1070, 1080, and 1090. Alternatively, the output devices can be connected to system 1000 using the communications channel 1060 via the communications interface 1050. The display 1100 and speakers 1110 can be integrated in a single unit with the other components of system 1000 in an electronic device such as, for example, a television. In various embodiments, the display interface 1070 includes a display driver, such as, for example, a timing controller chip.

The display 1100 and speaker 1110 can alternatively be separate from one or more of the other components, for example, if the RF portion of input 1130 is part of a separate set-top box. In various embodiments in which the display 1100 and speakers 1110 are external components, the output signal can be provided via dedicated output connections, including, for example, HDMI ports, USB ports, or COMP outputs.

The embodiments can be carried out by computer software implemented by the processor 1010 or by hardware, or by a combination of hardware and software. As a non-limiting example, the embodiments can be implemented by one or more integrated circuits. The memory 1020 can be of any type appropriate to the technical environment and can be implemented using any appropriate data storage technology, such as optical memory devices, magnetic memory devices, semiconductor-based memory devices, fixed memory, and removable memory, as non-limiting examples. The processor 1010 can be of any type appropriate to the technical environment, and can encompass one or more of microprocessors, general purpose computers, special purpose computers, and processors based on a multi-core architecture, as non-limiting examples.

**Figure 2** describes an example of a context in which following embodiments can be implemented. In this context 200, a system 210 transmits a video stream to a system 230 using a communication channel 220. Examples of system 210 comprise a camera, a storage device, a computer, a drone, a video surveillance camera, a server or any device capable of delivering a video stream. The video stream is either encoded and transmitted by the system 210 or received and/or stored by the system 210 and then transmitted. The communication channel 220 is a wired (for example Internet, Ethernet, Cable network) or a wireless (for example WiFi, 3G, 4G or 5G, satellite TV, terrestrial TV) network link. The system 230 receives and decodes the video stream to generate a sequence of decoded pictures. An example of system 230 is a set top box. The obtained sequence of decoded pictures is then transmitted to a display system 250 using a communication channel 240, that could be a wired or wireless network as introduced above. The display system 250 then displays said pictures. An example of display system 250 is a television or display monitor.

In an embodiment, the system 230 and the display system 250 are comprised in a single device, thus combining the reception, decoding and display of the video stream. Examples of such device are a television, a computer, a tablet, a smartphone, a head-mounted display, a vehicle entertainment system, a medical device.

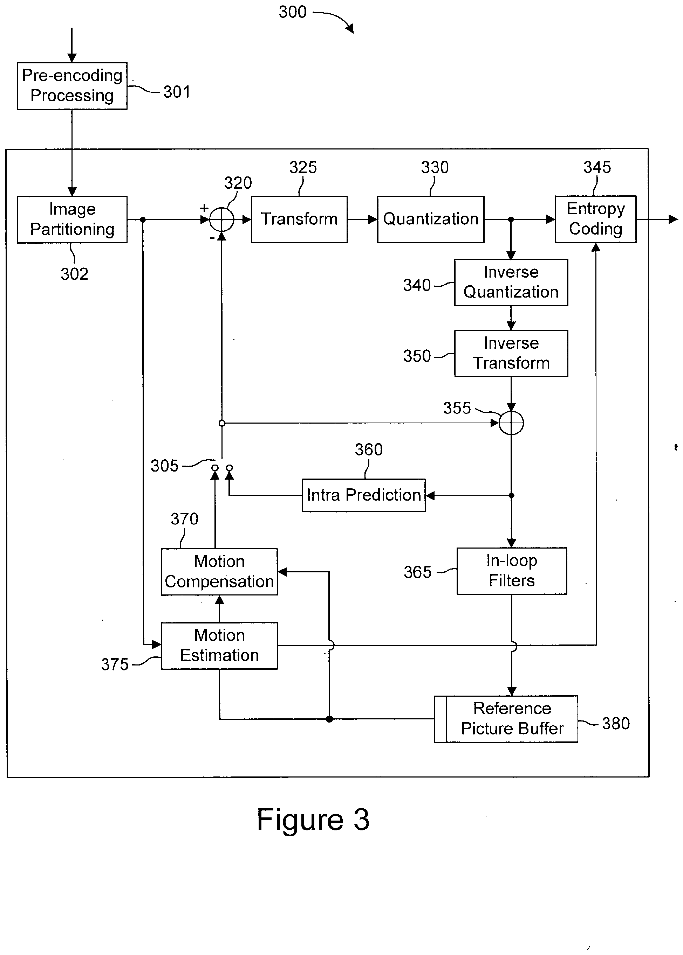

**Figure 3** illustrates a block diagram of an example of video encoder. Variations of this encoder 300 are contemplated, but the encoder 300 is described below for purposes of clarity without describing all expected variations. Before being encoded, the video sequence may go through pre-encoding processing 301, for example, applying a color transform to the input color picture (e.g., conversion from RGB 4:4:4 to YcbCr 4:2:0), or performing a remapping of the input picture components in order to get a signal distribution more resilient to compression (for instance using a histogram equalization of one of the color components). Metadata can be associated with the pre-processing and attached to the bitstream, for example in the form of supplemental enhancement information (SEI) messages, for the standards that include such mechanism.

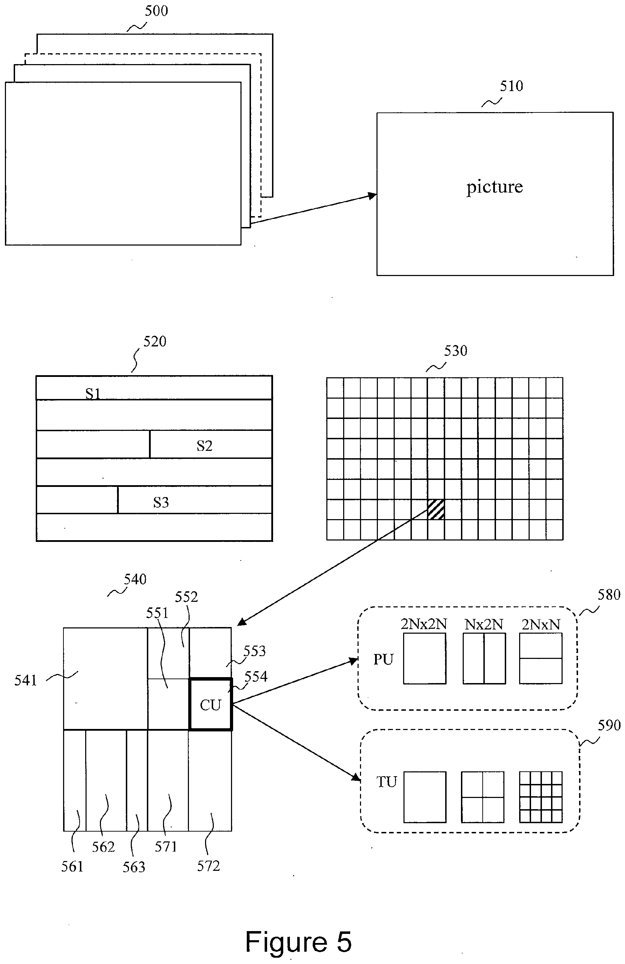

In the encoder, a picture is encoded by the encoder elements as described below. The picture to be encoded is partitioned (302); for example as further described in figure 5, and processed in units such as coding units. Each unit is encoded using, for example, either an intra or inter mode. When a unit is encoded in an intra mode, it performs intra prediction (360). In an inter mode, motion estimation (375) and compensation (370) are performed. The encoder decides (305) which one of the intra mode or inter mode to use for encoding the unit, and indicates the intra/inter decision by, for example, a prediction mode flag. Prediction residuals are calculated, for example, by subtracting (320) the predicted block from the original image block. The prediction residuals are then transformed (325) and quantized (330). The quantized transform coefficients, as well as motion vectors and other syntax elements, are entropy coded (345) to output a bitstream. The encoder can skip the transform and apply quantization directly to the non-transformed residual signal. The encoder can bypass both transform and quantization, i.e., the residual is coded directly without the application of the transform or quantization processes.

The encoder decodes an encoded block to provide a reference for further predictions. The quantized transform coefficients are de-quantized (340) and inverse transformed (350) to decode prediction residuals. Combining (355) the decoded prediction residuals and the predicted block, an image block is reconstructed. In-loop filters (365) are applied to the reconstructed picture to perform, for example, deblocking/SAO (Sample Adaptive Offset), Adaptive Loop-Filter (ALF) filtering to reduce encoding artifacts. The filtered image is stored at a reference picture buffer (380) for further use.

The encoder also generally performs video decoding as part of encoding video data.

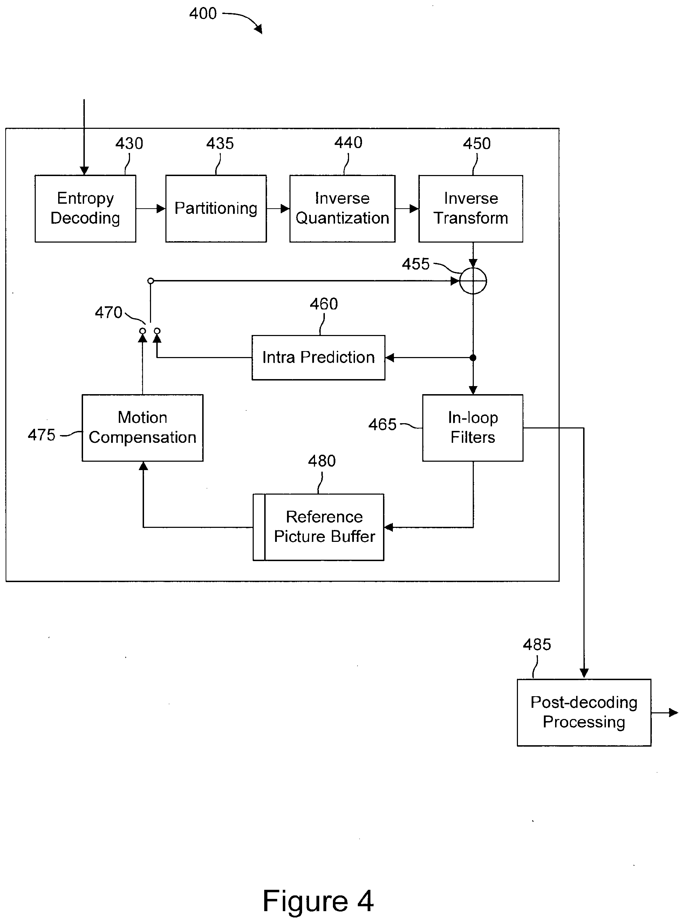

**Figure 4** illustrates a block diagram of an example of video decoder. In the decoder 400, a bitstream is decoded by the decoder elements as described below. Video decoder 400 generally performs a decoding pass reciprocal to the encoding pass as described in previous figure. The input of the decoder includes a video bitstream, which can be generated by video encoder 300 of figure 3. The bitstream is first entropy decoded (430) to obtain transform coefficients, motion vectors, and other coded information. The picture partition information indicates how the picture is partitioned. The decoder may therefore divide (435) the picture according to the decoded picture partitioning information. The transform coefficients are de-quantized (440) and inverse transformed (450) to decode the prediction residuals. Combining (455) the decoded prediction residuals and the predicted block, an image block is reconstructed. The predicted block can be obtained (470) from intra prediction (460) or motion-compensated prediction (i.e., inter prediction) (475). In-loop filters (465) are applied to the reconstructed image. The filtered image is stored at a reference picture buffer (480).

The decoded picture can further go through post-decoding processing (485), for example, an inverse color transform (e.g., conversion from YCbCr 4:2:0 to RGB 4:4:4) or an inverse remapping performing the inverse of the remapping process performed in the pre-encoding processing (301 of figure 3). The post-decoding processing can use metadata derived in the pre-encoding processing and signaled in the bitstream.

**Figure 5** illustrates an example of partitioning undergone by an image of an original video sequence. An original video sequence 500 comprises a plurality of pictures 510. A picture comprises a plurality of pixels, generally arranged in a grid comprising rows and columns. It is considered in this document that a pixel is composed of three components: a luminance component and two chrominance components. Other types of pixels are however possible comprising less or more components such as only a luminance component or an additional depth component or an additional transparency component.

A picture is divided into a plurality of coding entities. First, as represented by reference 530, a picture is divided in a grid of blocks called coding tree units (CTU). A CTU consists of a block of luminance samples together with two corresponding blocks of chrominance samples. The size of such block is generally N$\times$N, and N is generally a power of two having a maximum value of "128" for example. Second, a picture is divided into one or more groups of CTU. For example, it can be divided into one or more tile rows and tile columns, a tile being a sequence of CTU covering a rectangular region of a picture. In some cases, a tile could be divided into one or more bricks, each of which consisting of at least one row of CTU within the tile. Above the concept of tiles and bricks, another encoding entity, called slice, exists, that can contain at least one tile of a picture or at least one brick of a tile. In the example represented by reference 520, the picture 21 is divided into three slices S1, S2 and S3 of the raster-scan slice mode, each comprising a plurality of tiles (not represented), each tile comprising only one brick.

As represented by reference 540, a CTU may be partitioned into the form of a hierarchical tree of one or more sub-blocks called coding units (CU). The CTU is the root (i.e., the parent node) of the hierarchical tree and can be partitioned in a plurality of CU (i.e., child nodes). Each CU becomes a leaf of the hierarchical tree if it is not further partitioned in smaller CU or becomes a parent node of smaller CU (i.e., child nodes) if it is further partitioned. During the coding of a picture, the partitioning is adaptive, each CTU being partitioned to Optimize a compression efficiency.

For example, the CTU 540 is first partitioned in four square CU using a quadtree type partitioning. The upper left CU 541 is a leaf of the hierarchical tree since it is not further partitioned, i.e., it is not a parent node of any other CU. The upper right CU is further partitioned in four smaller square CU 551, 552, 553, 554 using again a quadtree type partitioning. The bottom left CU is vertically partitioned in three rectangular CU 561, 562, 563 using a ternary tree type partitioning. The bottom right CU is vertically partitioned in two rectangular CU 571, 572 using a binary tree type partitioning.

In HEVC appeared the concept of prediction unit (PU) and transform unit (TU). Indeed, in HEVC, the coding entity that is used for prediction (i.e., a PU) and transform (i.e., a TU) can be a subdivision of a CU. For example, as represented in the figure, a CU of size 2N×2N, can be divided in PU 580 of size N×2N or of size 2N×N. In addition, said CU can be divided in four TU 590 of size N×N or in "16" TU of size (N/2)×(N/2). Other video coding standards also use these notions. In VVC, except in some particular cases, frontiers of the TU and PU are aligned on the frontiers of the CU. Consequently, a CU comprises generally one TU and one PU.

In the present application, the terms "reconstructed" and "decoded" may be used interchangeably, the terms "pixel" and "sample" may be used interchangeably, the terms "image," "picture", "sub-picture", "slice" and "frame" may be used interchangeably. Usually, but not necessarily, the term "reconstructed" is used at the encoder side while "decoded" is used at the decoder side. In the present application, the term "block" or "picture block" can be used to refer to any one of a CTU, a CU, a PU and a TU. In addition, the term "block" or "picture block" can be used to refer to a macroblock, a partition and a sub-block as specified in H.264/AVC or in other video coding standards, and more generally to refer to an array of samples of numerous sizes.

Video coding standards like AVC, HEVC and VVC enable embedding of metadata in video bitstreams through SEI (Supplemental Enhancement information) messages. Those messages are defined either in the core standard or companion standard like VSEI (Versatile Supplemental Enhancement Information), and more get added in successive versions of these standards.

A SEI message is a syntax structure that is defined in various MPEG standards to allow carriage of metadata. It is a specific type of NAL (Network Access Layer) unit, which is the elementary packet in MPEG bitstream formats. The SEI syntax may vary slightly across different standards, but it commonly contains at least a payload type, a payload length, and the payload itself. The SEI syntax defined for VVC is illustrated in Table 1 as an example.

Table 1

| sei_message( ) { | Descriptor |
|---|---|
|    payloadType = 0 | |
| do { | |
|    payload_type_byte | u(8) |
|    payloadType += payload_type_byte | |
| } while( payload_type_byte = = 0xFF ) | |
| payloadSize = 0 | |
| do { | |
|    payload_size_byte | u(8) |
|    payloadSize += payload_size_byte | |
| } while(payload_size_byte = = 0xFF ) | |
| sei_payload( payloadType, payloadSize ) | |
| } | |

In addition, a specific syntax structure is typically defined for each payload type and instantiated by a sei_payload syntax structure according to each payload type. For example, a specific SEI message related to Neural-Network Post-Filter Characteristics (NNPFC-SEI) specifies that a neural network may be used as a post-processing filter (hereafter abbreviated as NNPF) and provides some parameters of such neural network, therefore allowing an encoder to define a neural network for performing a post-processing operation after the decoding operation. The syntax of such NNPFC-SEI message, as disclosed in ISO/IEC DIS 23002-7, is illustrated in Table 2.

Table 2

| nn_post_filter_characteristics( payloadSize ) { | Descriptor |
|---|---|
|    nnpfc_purpose | u(16) |
|    nnpfc_id | ue(v) |
|    nnpfc_base_flag | u(1) |
|    nnpfc_mode_idc | ue(v) |

(continued)

| | |
|---|---|
| if( nnpfc_mode_idc == 1 ) { | |
| while( !byte_aligned( ) ) | |
| nnpfc_alignment_zero_bit_a | u(1) |
| nnpfc_tag_uri | st(v) |
| nnpfc_uri | st(v) |
| } | |
| nnpfc_property_present_flag | u(1) |
| if( nnpfc_property_present_flag ) { | |
| /* input and output formatting */ | |
| nnpfc_num_input_pics_minus1 | ue(v) |
| if( nnpfc_num_input_pics_minusl > 0 ) { | |
| for( i = 0; i <= nnpfc_num_input_pics_minus1; i++ ) | |
| nnpfc_input_pic_filtering_flag[ i ] | u(1) |
| nnpfc_absent_input_pic_zero_flag | u(1) |
| } | |
| if( ChromaUpsamplingFlag ) | |
| nnpfc_out_sub_c_flag | u(1) |
| if( ColourizationFlag ) | |
| nnpfc_out_colour_format_idc | u(2) |
| if( ResolutionResamplingFlag ) { | |
| nnpfc_pic_width_num_minus1 | ue(v) |
| nnpfc_pic_width_denom_minus1 | ue(v) |
| nnpfc_pic_height_num_minus1 | ue(v) |
| nnpfc_pic_height_denom_minus1 | ue(v) |
| } | |
| if( PictureRateUpsamplingFlag ) | |
| for( i = 0; i < nnpfc_num_input_pics_minus1; i++ ) | |
| nnpfc_interpolated_pics[ i ] | ue(v) |
| if( TemporalExtrapolationFlag ) | |
| nnpfc_extrapolated_pics_minus1 | ue(v) |
| nnpfc_component_last_flag | u(1) |
| nnpfc_inp_format_idc | ue(v) |
| nnpfc_auxiliary_inp_idc | ue(v) |
| nnpfc_inp_order_idc | ue(v) |
| if( nnpfc_inp_format_idc == 1 ) { | |
| if( nnpfc_inp_order_idc != 1 ) | |
| nnpfc_inp_tensor_luma_bitdepth_minus8 | ue(v) |
| if( nnpfc_inp_order_idc > 0 ) | |
| nnpfc_inp_tensor_chroma_bitdepth_minus8 | ue(v) |
| } | |

(continued)

| | |
|---|---|
| nnpfc_out_format_idc | ue(v) |
| nnpfc_out_order_idc | ue(v) |
| if( nnpfc_out_format_idc = = 1 ) { | |
| if( nnpfc_out_order_idc != 1 ) | |
| nnpfc_out_tensor_luma_bitdepth_minus8 | ue(v) |
| if( nnpfc_out_order_idc != 0 ) | |
| nnpfc_out_tensor_chroma_bitdepth_minus8 | ue(v) |
| } | |
| nnpfc_separate_colour_description_present_flag | u(1) |
| if( nnpfc_separate_colour_description_present_flag) { | |
| nnpfc_colour_primaries | u(8) |
| nnpfc_transfer_characteristics | u(8) |
| if( nnpfc_out_format_idc = = 1 ) { | |
| nnpfc_matrix_coeffs | u(8) |
| nnpfc_full_range_flag | u(1) |
| } | |
| } | |
| if( nnpfc_out_order_idc > 0 ) | |
| nnpfc_chroma_loc_info_present_flag | u(1) |
| if( nnpfc_chroma_loc_info_present_flag ) | |
| nnpfc_chroma_sample_loc_type_frame | ue(v) |
| nnpfc_overlap | ue(v) |
| nnpfc_constant_patch_size_flag | u(1) |
| if( nnpfc_constant_patch_size_flag ) { | |
| nnpfc_patch_width_minus1 | ue(v) |
| nnpfc_patch_height_minus1 | ue(v) |
| } else { | |
| nnpfc_extended_patch_width_cd_delta_minus1 | ue(v) |
| nnpfc_extended_patch_height_cd_delta_minus1 | ue(v) |
| } | |
| nnpfc_padding_type | ue(v) |
| if( nnpfc_padding_type = = 4 ) { | |
| if( nnpfc_inp_order_idc != 1 ) | |
| nnpfc_luma_padding_val | ue(v) |
| if( nnpfc_inp_order_idc != 0 ) { | |
| nnpfc_cb_padding_val | ue(v) |
| nnpfc_cr_padding_val | ue(v) |
| } | |
| } | |
| nnpfc_complexity_info_present_flag | u(1) |

(continued)

| | |
|---|---|
| if( nnpfc_complexity_info_present_flag) { | |
|    nnpfc_parameter_type_idc | u(2) |
|    if( nnpfc_parameter_type_idc != 2 ) | |
|       nnpfc_log2_parameter_bit_length_minus3 | u(2) |
|    nnpfc_num_parameters_idc | u(6) |
|    nnpfc_num_kmac_operations_idc | ue(v) |
|    nnpfc_total_kilobyte_size | ue(v) |
| } | |
| nnpfc_num_metadata_extension_bits | ue(v) |
| if( nnpfc_num_metadata_extension_bits > 0 ) | |
|    nnpfc_reserved_metadata_extension | u(v) |
| } | |
| /* ISO/IEC 15938-17 bitstream */ | |
| if( nnpfc_mode_idc == 0 ) { | |
|    while( !byte_aligned( ) ) | |
|       nnpfc_alignment_zero_bit_b | u(1) |
|    for( i = 0; more_data_in_payload(); i++ ) | |
|       nnpfc_payload_byte[ i ] | b(8) |
| } | |
| } | |

A NNPFC-SEI message indicates the intended purpose of the NNPF, specifies the input and output of the neural network and describes its complexity. Up to now, 6 modes have been defined: enhancing visual quality, changing spatial resolution (e.g., up-sampling from high-definition decoded video to ultra-high definition), changing picture rate (e.g., up-sampling from 30 Hz to 60 Hz), up-sampling bit depth to increase the dynamic range of pixel values, colorization to convert monochrome video to full colors and temporal extrapolation. The SEI syntax defined in ISO/IEC DIS 23002-7 allows to define the purpose of a NNPF by using a flag hereafter named nnpfc_purpose as illustrated in Table 3, where ( nnpfc_purpose & bitMask ) not equal to 0 indicates that the NNPF has the purpose associated with the bitMask value. When nnpfc_purpose is greater than 0 and ( nnpfc_purpose & bitMask ) is equal to 0, the purpose associated with the bitMask value is not applicable to the NNPF. When nnpfc_purpose is equal to 0x00, the NNPF may be used as determined by the application and as specified by the nnpfc_application_purpose_tag_uri. For instance, if the nnpfc_purpose is equal to 0x0C (0b0001100), it means that we want to activate a resolution resampling NNPF and a picture rate upsampling NNPF.

Table 3

| bitMask | Interpretation |
|---|---|
| 0x01 | General visual quality improvement |
| 0x02 | Chroma upsampling (from the 4:2:0 chroma format to the 4:2:2 or 4:4:4 chroma format, or from the 4:2:2 chroma format to the 4:4:4 chroma format) |
| 0x04 | Resolution resampling (increasing or decreasing the width or height) |
| 0x08 | Picture rate upsampling |
| 0x10 | Bit depth upsampling (increasing the luma bit depth or the chroma bit depth) |
| 0x20 | Colourization |
| 0x40 | Temporal extrapolation |

The value of nnpfc_purpose may be in the range of 0 to 127. This bitfield is used to derive corresponding variables for the purpose flags shown in table 3. The variables ChromaUpsamplingFlag, ResolutionResamplingFlag, Picture-RateUpsamplingFlag, BitDepthUpsamplingFlag, ColourizationFlag, and TemporalExtrapolationFlag specifying whether nnpfc_purpose indicates the purpose of the NNPF to include chroma upsampling, resolution resampling, picture rate upsampling, bit depth upsampling, colourization mode and temporal extrapolation respectively, are derived from the nnpfc_purpose bitfield as follows:

$$ChromaUpsamplingFlag = ( ( nnpfc\_purpose \,\&\, 0x02 ) > 0 ) \,?\, 1 : 0$$

$$ResolutionResamplingFlag = ( ( nnpfc\_purpose \,\&\, 0x04 ) > 0 ) \,?\, 1 : 0$$

$$PictureRateUpsamplingFlag = ( ( nnpfc\_purpose \,\&\, 0x08 ) > 0 ) \,?\, 1 : 0$$

$$BitDepthUpsamplingFlag = ( ( nnpfc\_purpose \,\&\, 0x10 ) > 0 ) \,?\, 1 : 0$$

$$ColourizationFlag = ( ( nnpfc\_purpose \,\&\, 0x20 ) > 0 ) \,?\, 1 : 0$$

$$TemporalExtrapolationFlag = ( ( nnpfc\_purpose \,\&\, 0x40 ) > 0 ) \,?\, 1 : 0$$

The use of a NNPFC-SEI message provides backward compatibility. Indeed, by implementing neural-network filters as a post-processing step and signaling them in a SEI message, their utilization can be introduced to neural network capable devices and services without negatively impacting older systems that lack the ability to execute neural networks.

Embodiments described hereafter have been designed with the foregoing in mind and extend the purpose of NNPFC-SEI messages to include film grain applications. Therefore, a system compliant with such messages will be able to synthesis (i.e. reconstruct) a film grain picture by using a post-processing neural-network filter. The film grain picture may be combined with the decoded picture to simulate the visual and artistic effect of film grain. In at least one embodiment, the post-processing neural-network filter directly inserts the film grain in the decoded picture. In at least one embodiment, the post-processing neural-network filter performs a film grain synthesis that generates a picture to be added to the decoded image. The combination of these pictures determines a resulting decoded picture that may be provided to another device or displayed. At least one embodiment proposes to signal the use of a film grain neural network post-processing filter and provides parameters for the film grain synthesis.

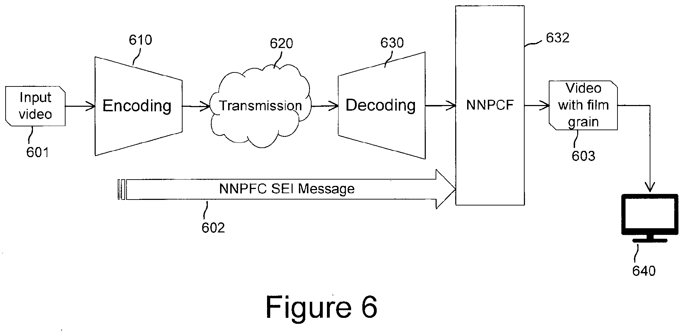

**Figure 6** illustrates a block diagram of an example of video coding system according to embodiments. In step 610, the input video (601) is encoded. A NNPFC SEI message (602) comprising film grain synthesis parameters is defined, for example according to the syntax described in the tables below. In step 620, the encoded video and the NNPFC SEI message are provided to the decoder and conventional video decoding is performed in step 630. Since the NNPFC SEI message comprise syntax elements related to film grain synthesis, in step 632, the decoded video is post-processed by the neural network post-processing filter to synthetize a film grain to be combined with the decoded video (i.e. determine a film grain picture to be added). In step 640, the resulting video with film grain is displayed. The resulting video may also be provided to another device.

In at least one embodiment, the use of a film grain related neural network post-processing filter is signaled as an additional purpose in a NNPCF-SEI message by using a new flag, hereafter called FilmGrainSynthesisFlag, inserted in one entry of the table as illustrated in Table 4. The value of 0x80 for the FilmGrainSynthesisFlag is an example. Other bitmask values may be used to carry this flag.

Table 4

| bitMask | Interpretation |
|---|---|
| 0x01 | General visual quality improvement |
| 0x02 | Chroma upsampling (from the 4:2:0 chroma format to the 4:2:2 or 4:4:4 chroma format, or from the 4:2:2 chroma format to the 4:4:4 chroma format) |
| 0x04 | Resolution resampling (increasing or decreasing the width or height) |
| 0x08 | Picture rate upsampling |

(continued)

| bitMask | Interpretation |
|---------|----------------|
| 0x10 | Bit depth upsampling (increasing the luma bit depth or the chroma bit depth) |
| 0x20 | Colourization |
| 0x40 | Temporal extrapolation |
| 0x80 | Film Grain synthesis |

The other elements of Table 4 are identical to those described in Table 3. The variable FilmGrainSynthesisFlag, defined for specifying the film grain neural network post-processing filter is derived from the nnpfc_purpose bitfield as follows:

$$FilmGrainSynthesisFlag = ( ( nnpfc\_purpose \ \& \ 0x80 ) > 0 ) \ ? \ 1 : 0$$

After the addition of this new bitmask value, the value of nnpfc_purpose may now be in the range of 0 to 255, inclusive and values of 256 to 65 535, inclusive may be reserved for future use.

Optionally, new sections may be added to the NNPCF-SEI message to specify syntax elements representing parameters (i.e. characteristics, modes or settings) of the film grain synthesis.

In at least one embodiment, an information representing a style of film grain is inserted in the NNPCF-SEI message, under the condition of the activation of the FilmGrainSynthesisFlag. In such embodiment, the **nnpfc_film_grain_style** syntax element represents the style of film grain to be reproduced when the FilmGrainSynthesisFlag is enabled (i.e., value equal to '1'). The value of this parameter represents a film grain style selected among a list of film grain styles, for example coded over 8 bits. In other embodiments, the value is coded over other bit sizes, for example over 16 bits.

The table 5 illustrates an example of syntax for the NNPCF-SEI message. For the sake of readability, only an extract of the complete message is illustrated in this table. Please refer to the syntax of table 2 for the other elements.

Table 5

| ... | |
|-----|--|
| if( PictureRateUpsamplingFlag ) | |
| for( i = 0; i < nnpfc_num_input_pics_minus1; i++ ) | |
| nnpfc_interpolated_pics[ i ] | ue(v) |
| nnpfc_component_last_flag | u(1) |
| nnpfc_inp format_idc | ue(v) |
| nnpfc_auxiliary_inp_idc | ue(v) |
| nnpfc_inp_order_idc | ue(v) |
| if( nnpfc_inp_format_idc == 1) { | |
| if( nnpfc_inp_order_idc != 1) | |
| nnpfc_inp_tensor_luma_bitdepth_minus8 | ue(v) |
| if( nnpfc_inp_order_idc > 0 ) | |
| nnpfc_inp_tensor_chroma_bitdepth_minus8 | ue(v) |
| } | |
| if(FilmGrainSynthesisFlag) { | |
| nnpfc_film_grain_style | u(8) |
| } | |
| nnpfc_out_format_idc | ue(v) |
| nnpfc_out_order_idc | ue(v) |

(continued)

| | |
|---|---|
| if( nnpfc_out_format_idc == 1 ) { | |
| if( nnpfc_out_order_idc != 1 ) | |
| nnpfc_out_tensor_luma_bitdepth_minus8 | ue(v) |
| if( nnpfc_out_order_idc != 0 ) | |
| nnpfc_out_tensor_chroma_bitdepth_minus8 | ue(v) |
| } | |
| ... | |

The selected film grain style is provided to the neural network post filter that generates a picture with the corresponding film grain.

In another embodiment, the syntax element **nnpfc_film_grain_style** is not present and a default style vector for the film grain is used at the decoder side.

In at least one embodiment, an information representing film grain intensity is inserted in the NNPCF-SEI message, under the condition of the activation of the FilmGrainSynthesisFlag. In such embodiment, the **nnpfc_film_grain_intensity** syntax element represents the intensity of the film grain to be reproduced when the FilmGrainSynthesisFlag is enabled (i.e., value equal to '1').

In at least one embodiment, the value of this parameter is coded over two bits, allowing to define different levels of intensity as illustrated in table 6.

Table 6

| nnpfc_film_grain_intensity | Interpretation |
|---|---|
| 0 | Low |
| 1 | Medium |
| 2 | High |
| 3 | Very High |

In at least one embodiment, the film grain intensity is coded with a scalar value, for example coded on 8 bits, leading to higher flexibility and adaptability compared to a label selected amongst Low, Medium, High, and Very High values. In this case, the value for the film grain intensity may for example express a percentage of a maximal film grain intensity.

This section refers to the intensity of the grain. In other embodiments, other properties of the film grain, such as grain pattern or the size of the film grain may be considered using different syntax elements as described below.

In at least one embodiment, an information representing film grain size is inserted in the NNPCF-SEI message, under the condition of the activation of the FilmGrainSynthesisFlag. In such embodiment, the **nnpfc_film_grain_size** syntax element represents the size of the film grain to be reproduced when the FilmGrainSynthesisFlag is enabled (i.e., value equal to '1').

In at least one embodiment, the value of this parameter is coded over two bits, allowing to define different levels of size as illustrated in table 7.

Table 7

| nnpfc_film_grain_size | Interpretation |
|---|---|
| 0 | Low |
| 1 | Medium |
| 2 | High |
| 3 | Very High |

In at least one embodiment, the film grain size is coded with a scalar value, for example coded on 8 bits, leading to higher flexibility and adaptability compared to a label selected amongst Low, Medium, High, and Very High values. In this case, the value for the film grain size may for example express a percentage of a maximal film grain size.

In at least one embodiment, an information representing film grain pattern is inserted in the NNPCF-SEI message, under the condition of the activation of the FilmGrainSynthesisFlag. In such embodiment, the **nnpfc_film_grain_pattern** syntax element represents the pattern of the film grain to be reproduced when the FilmGrainSynthesisFlag is enabled (i.e., value equal to '1').

In at least one embodiment, the film grain pattern is coded with a scalar value, for example coded on 8 bits, leading to higher flexibility and adaptability. In this case, the value for the film grain pattern may for example express a pattern type from a list of film grain patterns.

In at least one embodiment, an information representing film grain synthesis mode is inserted in the NNPCF-SEI message, under the condition of the activation of the FilmGrainSynthesisFlag. In such embodiment, the nnpfc_film_grain_mode syntax element represents the purpose of the film grain selected amongst adding film grain, reproducing artistic intent, masking artifact or simulating artistic intent as illustrated in Table 8.

Table 8

| nnpfc_film_grain_mode | Interpretation |
|---|---|
| 0 | Adding film grain |
| 1 | Artistic intent reproduction |
| 2 | Artifact masking |
| 3 | Artistic intent simulation |

When nnpfc_film_grain_mode is equal to 0, it is expected to have an additional information regarding the amount of grain we should add, for example using syntax element nnpfc_film_grain_intensity described above. When nnpfc_film_grain_mode is equal to 1, it is expected that the film grain reproduces a given artistic intent by using a selected style vector for example specified using the syntax element nnpfc_film_grain_style described above. When nnpfc_film_grain_mode is equal to 2 it is expected to have an additional information regarding the amount of grain we should add, see the syntax element nnpfc_film_grain_intensity. The key difference with nnpfc_film_grain_mode equal to 0 is that the post filter could be configured differently. When nnpfc_film_grain_mode is equal to 3, it is expected that the film grain reproduces a given artistic intent by using a selected style vector for example specified using the syntax element nnpfc_film_grain_style described above. However, the given style does not correspond to the style of the original content.

In at least one embodiment, all the film grain syntax elements are used, as illustrated in Table 9. These syntax elements are all optional and are not necessarily present. Indeed, in a minimalistic form, the film grain is signaled using the nnpfc_purpose bitfield without any of these parameters.

Table 9

| .... | |
|---|---|
| if(FilmGrainSynthesisFlag) { | |
| nnpfc_film_grain_style | u(8) |
| nnpfc_film_grain_intensity | u(8) |
| nnpfc_film_grain_size | u(8) |
| nnpfc_film_grain_pattern | u(8) |
| nnpfc_film_grain_mode | u(2) |
| } | |
| .... | |

In at least one embodiment, an additional binary flag is used per each film grain syntax element. In case this binary flag is equal to 0, it indicates that the corresponding film grain syntax element is not present. In case the binary flag is equal to 1, it indicates that the corresponding film grain syntax element follows. This syntax is described in Table 10.

Table 10

| .... | |
|---|---|

(continued)

| | |
|---|---|
| if(FilmGrainSynthesisFlag) { | |
| nnpfc_film_grain_style_flag | u(1) |
| if (nnpfc_film_grain_style_flag == 1) | |
| nnpfc_film_grain_style | u(8) |
| nnpfc_film_grain_intensity_flag | u(1) |
| if (nnpfc film_grain_intensity flag == 1) | |
| nnpfc_film_grain_intensity | u(8) |
| nnpfc_film_grain_size_flag | u(1) |
| if (nnpfc_film_grain_size_flag == 1) | |
| nnpfc film_grain size | u(8) |
| nnpfc_film_grain_pattern_flag | u(1) |
| if (nnpfc_film_grain_pattern_flag == 1) | |
| nnpfc_film_grain_pattern | u(8) |
| nnpfc_film_grain_mode_flag | u(1) |
| if (nnpfc_film_grain_mode_flag == 1) | |
| nnpfc_film_grain_mode | u(2) |
| } | |
| .... | |

In at least one embodiment, instead of using 5 different individual flags, the presence of the parameters may be indicated in a 5-bits bit field as illustrated in table 11.

Table 11

| | |
|---|---|
| if(FilmGrainSynthesisFlag) { | |
| nnpfc_global_film_grain_flag | u(5) |
| if (nnpfc_global_film_grain_flag && (0x01) == 0x01) | |
| nnpfc_film_grain_style | u(8) |
| if (nnpfc_global_film_grain_flag && (0x02) == 0x02) | |
| nnpfc_film_grain_intensity | u(8) |
| if (nnpfc_global_film_grain_flag && (0x04) == 0x04) | |
| nnpfc_film_grain_size | u(8) |
| if (nnpfc_global_film_grain_flag && (0x08) == 0x08) | |
| nnpfc_film_grain_pattern | u(8) |
| if (nnpfc_global_film_grain_flag && (0x10) == 0x10) | |
| nnpfc_film_grain_mode | u(2) |
| .} | |

In at least one embodiment, an information representing a region of interest where film grain synthesis should be applied is inserted in the NNPCF-SEI message, under the condition of the activation of the FilmGrainSynthesisFlag. In such embodiment, additional parameters determine the region of interest specified as a rectangular area. In at least one embodiment illustrated in table 12, the region of interest is defined by coordinates of the top left corner of the rectangular area and size information (i.e., width and height of the rectangular area). More particularly, nnpfc_film_grain_roi_topleft_x and nnpfc_film_grain_roi_topleft_y syntax elements respectively represent the coordinates of the top left corner of the region of interest while nnpfc_film_grain_roi_width and nnpfc_film grain roi height syntax elements respectively represent the width and height of the region of interest. Table 12 illustrates an example of syntax for such embodiment. The nnpfc_film_grain_mode syntax element is present in this example but is optional and can be ommited. Conversely, the nnpfc_film_grain_intensity, nnpfc_film_grain_size, nnpfc_film_grain_pattern are omitted in this example but may be present with the syntax described above.

Table 12

| .... | |
|---|---|
| if(FilmGrainSynthesisFlag) { | |
| nnpfc_film_grain_style | u(8) |
| nnpfc_film_grain_mode | u(2) |
| nnpfc_film_grain_roi_topleft_x | u(8) |
| nnpfc_film_grain_roi_topleft_y | u(8) |
| nnpfc_film_grain_roi_width | u(8) |
| nnpfc_film_grain_roi_height | u(8) |
| } | |
| .... | |

In another embodiment, the region of interest is defined by coordinates of two opposites corners of the rectangular area (e.g., top-left and bottom-right corners). In another embodiment, the region of interest is defined by coordinates of the center of the rectangular area (e.g., top-left and bottom-right corners) and size information.

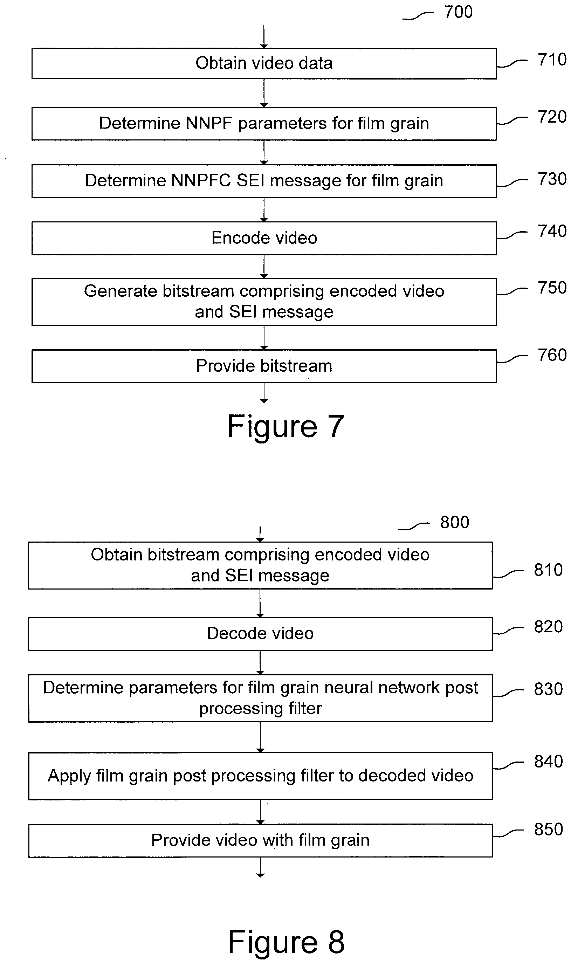

**Figure 7** illustrates an example process for encoding a bitstream comprising a film grain NNPFC SEI message according to embodiments. The process 700 is for example implemented by a processor 1010 of a device 1000 of figure 1, a system 210 of figure 2, or an encoder 300 of figure 3. In step 710, the processor obtains video data. In step 720, the processor determines neural network post-processing filter characteristics related to film grain, for example comprising parameters related to the film grain style, size, pattern. In step 730, the processor determines a film grain NNPFC SEI message comprising information related to the film grain parameters, for example according to the syntax described above. This step may comprise enabling the FilmGrainSynthesisFlag and defining a film grain style using the **nnpfc_film_grain_style** parameter. In step 740, the processor conventionally encodes the video. In step 750, the processor determines a bitstream that comprises the encoded video data and the film grain NNPFC SEI message. In step 760, the processor provides the bitstream.

In at least one embodiment, the NNPF is predetermined (i.e. standardized). In at least one embodiment, the NNPF is defined by a URL. In at least one embodiment, the weights of the NNPF model are transmitted in the bitstream (for example using ISO/IEC 15938-17 syntax introduced in table 2). These methods are activated using the **nnpfc_mode_id** flag and setting the appropriate parameters.

**Figure 8** illustrates an example process for decoding a bitstream comprising a film grain NNPFC SEI message according to embodiments. The process 800 is for example implemented by a device 1000 of figure 1, a system 230 of figure 2, or a decoder 400 of figure 4. In step 810, the processor obtains the bitstream that comprises an encoded video data and parameters for a post-processing filter packaged into a film grain NNPFC SEI message; for example based on the syntax of tables 3 or 4. In step 820, the processor conventionally decodes the video from the encoded video data. In step 830, the processor determines neural network post-processing filter characteristics related to film grain from the film grain NNPFC SEI message. In step 840, based on the determined characteristics, the processor applies the neural network post-processing filter to the decoded video. In step 850, the processor provides the video comprising film grain.

In at least one embodiment, the neural network post-processing filter is applied only under certain conditions such as a user choice, a device configuration parameter, or other conditions.

This application describes a variety of aspects, including tools, features, embodiments, models, approaches, etc. Many of these aspects are described with specificity and, at least to show the individual characteristics, are often described in a manner that may sound limiting. However, this is for purposes of clarity in description, and does not limit the application or scope of those aspects. Indeed, all of the different aspects can be combined and interchanged to provide further aspects. Moreover, the aspects can be combined and interchanged with aspects described in earlier filings as well.

The aspects described and contemplated in this application can be implemented in many different forms. Figures provide some embodiments, but other embodiments are contemplated and the discussion of these figures does not limit the breadth of the implementations. At least one of the aspects generally relates to video encoding and decoding, and at least one other aspect generally relates to transmitting a bitstream generated or encoded. These and other aspects can be implemented as a method, an apparatus, a computer readable storage medium having stored thereon instructions for encoding or decoding video data according to any of the methods described, and/or a computer readable storage medium having stored thereon a bitstream generated according to any of the methods described.

Various methods are described herein, and each of the methods comprises one or more steps or actions for achieving the described method. Unless a specific order of steps or actions is required for proper operation of the method, the order and/or use of specific steps and/or actions may be modified or combined.

Various numeric values are used in the present application, for example, 128 for the block size. The specific values are for example purposes and the aspects described are not limited to these specific values.

Various implementations involve decoding. "Decoding", as used in this application, can encompass all or part of the processes performed, for example, on a received encoded sequence in order to produce a final output suitable for display. In various embodiments, such processes include one or more of the processes typically performed by a decoder, for example, entropy decoding, inverse quantization, inverse transformation, and differential decoding. In various embodiments, such processes also, or alternatively, include processes performed by a decoder of various implementations described in this application, for example, adapting the illumination compensation process.

As further examples, in one embodiment "decoding" refers only to entropy decoding, in another embodiment "decoding" refers only to differential decoding, and in another embodiment "decoding" refers to a combination of entropy decoding and differential decoding. Whether the phrase "decoding process" is intended to refer specifically to a subset of operations or generally to the broader decoding process will be clear based on the context of the specific descriptions and is believed to be well understood by those skilled in the art.

Various implementations involve encoding. In an analogous way to the above discussion about "decoding", "encoding" as used in this application can encompass all or part of the processes performed, for example, on an input video sequence in order to produce an encoded bitstream. In various embodiments, such processes include one or more of the processes typically performed by an encoder, for example, partitioning, differential encoding, transformation, quantization, and entropy encoding. In various embodiments, such processes also, or alternatively, include processes performed by an encoder of various implementations described in this application.

As further examples, in one embodiment "encoding" refers only to entropy encoding, in another embodiment "encoding" refers only to differential encoding, and in another embodiment "encoding" refers to a combination of differential encoding and entropy encoding. Whether the phrase "encoding process" is intended to refer specifically to a subset of operations or generally to the broader encoding process will be clear based on the context of the specific descriptions and is believed to be well understood by those skilled in the art.

Note that the syntax elements as used herein, are descriptive terms. As such, they do not preclude the use of other syntax element names.

When a figure is presented as a flow diagram, it should be understood that it also provides a block diagram of a corresponding apparatus. Similarly, when a figure is presented as a block diagram, it should be understood that it also provides a flow diagram of a corresponding method/process.

Various embodiments refer to rate distortion optimization. In particular, during the encoding process, the balance or trade-off between the rate and distortion is usually considered, often given the constraints of computational complexity. The rate distortion optimization is usually formulated as minimizing a rate distortion function, which is a weighted sum of the rate and of the distortion. There are different approaches to solve the rate distortion optimization problem. For example, the approaches may be based on an extensive testing of all encoding options, including all considered modes or coding parameters values, with a complete evaluation of their coding cost and related distortion of the reconstructed signal after coding and decoding. Faster approaches may also be used, to save encoding complexity, in particular with computation of an approximated distortion based on the prediction or the prediction residual signal, not the reconstructed one. Mix of these two approaches can also be used, such as by using an approximated distortion for only some of the possible encoding options, and a complete distortion for other encoding options. Other approaches only evaluate a subset of the possible encoding options. More generally, many approaches employ any of a variety of techniques to perform the optimization, but the optimization is not necessarily a complete evaluation of both the coding cost and related distortion.

This application describes a variety of aspects, including tools, features, embodiments, models, approaches, etc. Many of these aspects are described with specificity and, at least to show the individual characteristics, are often described in a manner that may sound limiting. However, this is for purposes of clarity in description, and does not limit the application or scope of those aspects. Indeed, all of the different aspects can be combined and interchanged to provide further aspects. Moreover, the aspects can be combined and interchanged with aspects described in earlier filings as well.

The implementations and aspects described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. The methods can be implemented in, for example, a processor, which refers to processing devices in general, including, for example, a computer, a microprocessor, an integrated circuit, or a programmable logic device. Processors also include communication devices, such as, for example, computers, tablets, smartphones, cell phones, portable/personal digital assistants, and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this application are not necessarily all referring to the same embodiment.

Additionally, this application may refer to "determining" various pieces of information. Determining the information can include one or more of, for example, estimating the information, calculating the information, predicting the information, or retrieving the information from memory.

Further, this application may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

In the present application, the terms "reconstructed" and "decoded" may be used interchangeably, the terms "pixel" and "sample" may be used interchangeably, the terms "image," "picture", "frame", "slice" and "tiles" may be used interchangeably. Usually, but not necessarily, the term "reconstructed" is used at the encoder side while "decoded" is used at the decoder side. The terms "Post-Filter" and "Post-processing filter" may be used interchangeably.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Also, as used herein, the word "signal" refers to, among other things, indicating something to a corresponding decoder. For example, in certain embodiments the encoder signals a particular one of an illumination compensation parameter. In this way, in an embodiment the same parameter is used at both the encoder side and the decoder side. Thus, for example, an encoder can transmit (explicit signaling) a particular parameter to the decoder so that the decoder can use the same particular parameter. Conversely, if the decoder already has the particular parameter as well as others, then signaling can be used without transmitting (implicit signaling) to simply allow the decoder to know and select the particular parameter. By avoiding transmission of any actual functions, a bit savings is realized in various embodiments. It is to be appreciated that signaling can be accomplished in a variety of ways. For example, one or more syntax elements, flags, and so forth are used to signal information to a corresponding decoder in various embodiments. While the preceding relates to the verb form of the word "signal", the word "signal" can also be used herein as a noun.

As will be evident to one of ordinary skill in the art, implementations can produce a variety of signals formatted to carry information that can be, for example, stored or transmitted. The information can include, for example, instructions for performing a method, or data produced by one of the described implementations. For example, a signal can be formatted to carry the bitstream of a described embodiment. Such a signal can be formatted, for example, as an electromagnetic wave (for example, using a radio frequency portion of spectrum) or as a baseband signal. The formatting can include, for example, encoding a data stream and modulating a carrier with the encoded data stream. The information that the signal carries can be, for example, analog or digital information. The signal can be transmitted over a variety of different wired or wireless links, as is known. The signal can be stored on a processor-readable medium.

We describe a number of embodiments. Features of these embodiments can be provided alone or in any combination, across various claim categories and types.

**Claims**

1. A method comprising:

   obtaining video data;
   determining a supplemental enhancement information message comprising a flag enabling film grain neural network post-processing filter;
   encoding video data;
   generating bitstream comprising encoded video and supplemental enhancement information message; and
   providing the bitstream.

2. A method comprising:

   obtaining a bitstream comprising encoded video data and a supplemental enhancement information message comprising a flag enabling film grain neural network post-processing filter;
   decoding video;
   in the condition that the flag enabling film grain neural network post-processing filter is enabled, applying to the decoded video the film grain neural network post-processing filter; and
   providing the video.

3. The method of any of claims 1 or 2, wherein the supplemental enhancement information message further comprises information representative of film grain neural network post-processing filter parameters.

4. The method of claim 3, wherein the information representative of film grain neural network post-processing filter parameters represents a style for the film grain.

5. The method of claim 3, wherein the information representative of film grain neural network post-processing filter parameters represents an intensity for the film grain.

6. The method of claim 6, wherein the film grain intensity is selected among a set of predetermined levels of intensity.

7. The method of claim 3, wherein the information representative of film grain neural network post-processing filter parameters represents a film grain synthesis mode determining the purpose of the film grain addition.

8. The method of claim 3, wherein the information representative of film grain neural network post-processing filter parameters represents a size for the film grain.

9. The method of claim 3, wherein the information representative of film grain neural network post-processing filter parameters represents a grain pattern for the film grain.

10. The method of claim 3, wherein the information representative of film grain neural network post-processing filter parameters represents a region of interest determining a rectangular area where the film grain should be applied.

11. An apparatus comprising one or more processor configured to:

    obtain video data;
    determine a supplemental enhancement information message comprising a flag enabling film grain neural network post-processing filter;
    encode video data;
    generate bitstream comprising encoded video and supplemental enhancement information message; and
    provide the bitstream.

12. An apparatus comprising one or more processor configured to:

    obtain a bitstream comprising encoded video data and a supplemental enhancement information message comprising a flag enabling film grain neural network post-processing filter;
    decode video;
    in the condition that the flag enabling film grain neural network post-processing filter is enabled, apply to the decoded video the film grain neural network post-processing filter; and
providing the video.

13. A non-transitory computer readable medium comprising data content generated according to the method of any one of claims 1 to 10.

14. A non-transitory computer readable medium comprising instructions for performing the method of any one of claims 1 to 10 when executed by one of more processor.

15. A computer program product comprising instructions for performing the method of any one of claims 1 to 10 when executed by one of more processor.

1000 ⟍

Figure 1

~ 200

Figure 2

300 —

Figure 3

EP 4 648 410 A1

400

Figure 4

500

510

picture

520

| S1 | |
|---|---|
| | S2 |
| S3 | |

530

540

552

551

553

541

554

CU

561  562  563  571  572

580

2Nx2N  Nx2N  2NxN

PU

590

TU

Figure 5

Figure 6

700

| Obtain video data | 710 |

| Determine NNPF parameters for film grain | 720 |

| Determine NNPFC SEI message for film grain | 730 |

| Encode video | 740 |

| Generate bitstream comprising encoded video and SEI message | 750 |

| Provide bitstream | 760 |

## Figure 7

800

| Obtain bitstream comprising encoded video and SEI message | 810 |

| Decode video | 820 |

| Determine parameters for film grain neural network post processing filter | 830 |

| Apply film grain post processing filter to decoded video | 840 |

| Provide video with film grain | 850 |

## Figure 8

| | Europäisches Patentamt European Patent Office Office européen des brevets | **EUROPEAN SEARCH REPORT** | Application Number EP 24 31 5169 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2023/110642 A1 (INTERDIGITAL VC HOLDINGS FRANCE SAS [FR]) 22 June 2023 (2023-06-22) | 1-9, 11-15 | INV. H04N19/117 H04N19/46 |
| Y | * the whole document * ----- | 10 | H04N19/70 H04N19/85 |
| X | AMEUR ZOUBIDA ET AL: "Style-based film grain analysis and synthesis", PROCEEDINGS OF THE 32ND INTERNATIONAL SYMPOSIUM ON HIGH-PERFORMANCE PARALLEL AND DISTRIBUTED COMPUTING, ACMPUB27, NEW YORK, NY, USA, 7 June 2023 (2023-06-07), pages 229-238, XP059433262, DOI: 10.1145/3587819.3590992 ISBN: 979-8-4007-0284-6 * abstract * * sections 1, 2, 3, 5 * ----- | 1,2, 11-15 | G06T5/00 H04N19/17 H04N19/82 |
| Y | TENIOU (TENCENT) G ET AL: "AHG9/AHG13: unified proposal on film grain regions characteristics SEI message", 145. MPEG MEETING; 20240122 - 20240126; ONLINE; (MOTION PICTURE EXPERT GROUP OR ISO/IEC JTC1/SC29/WG11), , no. m66890 24 January 2024 (2024-01-24), XP030316597, Retrieved from the Internet: URL:https://dms.mpeg.expert/doc_end_user/documents/145_Teleconference/wg11/m66890-JVET-AG0328-v4-JVET-AG0328-v4.zip JVET-AG0328-v4.docx [retrieved on 2024-01-24] | 10 | |
| A | * abstract * * sections 1, 2, 3 * ----- | 1-9, 11-14 | TECHNICAL FIELDS SEARCHED (IPC) H04N G06T |
| A | WO 2021/122365 A1 (ERICSSON TELEFON AB L M [SE]) 24 June 2021 (2021-06-24) * paragraphs [0096] - [0100] * ----- | 1-15 | |

The present search report has been drawn up for all claims

| Place of search | Date of completion of the search | Examiner |
|---|---|---|
| Munich | 9 August 2024 | Fassnacht, Carola |

EPO FORM 1503 03.82 (P04C01)

## ANNEX TO THE EUROPEAN SEARCH REPORT
## ON EUROPEAN PATENT APPLICATION NO.

This annex lists the patent family members relating to the patent documents cited in the above-mentioned European search report.
The members are as contained in the European Patent Office EDP file on
The European Patent Office is in no way liable for these particulars which are merely given for the purpose of information.

09-08-2024

| Patent document cited in search report | Publication date | Patent family member(s) | | Publication date |
|---|---|---|---|---|
| WO 2023110642 A1 | 22-06-2023 | CN | 118435608 A | 02-08-2024 |
| | | WO | 2023110642 A1 | 22-06-2023 |
| WO 2021122365 A1 | 24-06-2021 | CN | 114982247 A | 30-08-2022 |
| | | EP | 4078978 A1 | 26-10-2022 |
| | | US | 2023362412 A1 | 09-11-2023 |
| | | WO | 2021122365 A1 | 24-06-2021 |

EPO FORM P0459

For more details about this annex : see Official Journal of the European Patent Office, No. 12/82